# EUROPEAN PATENT SPECIFICATION

(11) **EP 2 416 608 B1**
(45) Date of publication and mention of the grant of the patent: **03.12.2014**
(21) Application number: 10290433.1
(22) Date of filing: 02.08.2010
(51) Int. Cl.: H04W 52/02, H04W 84/04

(54) **A method and terminal for switching a base station for wireless telecommunications between a dormant mode and an active mode.**
Verfahren und Benutzerendgerät zur Schaltung einer Basisstation zur drahtlosen Telekommunikation zwischen einem Ruhemodus und einem Aktivmodus.
Procédé et terminal utilisateur pour commuter une station de base pour des télécommunications sans fil entre un mode de veille et un mode actif

(43) Date of publication of application: 08.02.2012
(73) Proprietor: ALCATEL LUCENT, 92100 Boulogne-Billancourt (FR)
(72) Inventor: Ho, Lester T.W., Swindon, Wiltshire SN5 5GD (GB); Ashraf, Imran, Swindon Wiltshire SN5 5AA (GB)
(74) Representative: Sarup, David Alexander

(56) References cited:
- WO-A1-2010/049119
- WO-A2-2010/071347
- US-A1- 2009 280 819
- US-A1- 2009 285 143
- US-A1- 2010 056 184

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell. A typical coverage range is tens of metres.

Femtocell base stations have auto-configuring properties so as to support plug-and-play deployment by users, for example in which femto base stations may integrate themselves into an existing macrocell network so as to connect to the core network of the macrocell network.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications. An alternative to such a wired broadband backhaul is to have a wireless backhaul.

Femtocell base stations are sometimes referred to as femtos.

In order to reduce power consumption, a power-saving mode has been introduced into base stations, including into femtos. In the power-saving mode various hardware components are switched off as not being required. The base station then makes no radio transmission and so is not detectable by a user terminal.

International (P.C.T.) Patent Publications WO2010/049119 and WO2010/071347 and United States Patent Publications US2010/056184 and US2009/280819 provide background. It is known from WO2010/049119 to provide a method of switching a base station for wireless telecommunications between a dormant mode and an active mode, the method comprising:
a user terminal in idle mode broadcasting over air a request for the base station to switch to active mode;
the base station receiving the request and responding by switching from dormant mode to active mode

### Summary

The present invention is characterised over the disclosure of WO2010/049119 in that the user terminal is a registered user terminal of several private access small cell base stations and comprises a memory in which the locations of those base stations are stored;
upon identifying the location of the user terminal using Global Positioning System, GPS, the user terminal determines whether the user terminal is in the vicinity of any of those base stations and, if so, repeatedly broadcasting over air the request with increasing power until one of the small cell base stations is detected by the user terminal as making pilot signal transmissions, or until the user terminal ceases to be in the vicinity of any of those base stations.

The reader is referred to the appended independent claims. Some preferred features are laid out in the dependent claims.

In some embodiments, the user terminal may then connect to the base station that is now in active mode.

Some preferred embodiments provide user terminal initiated wake up of small cell base stations, for example femtocell base stations, from dormant mode. Preferred embodiments advantageously enable a user terminal in idle mode to do this so as to then connect with the small cell base station.

This may be particularly useful in macrocell base station coverage holes, particularly as small cell base stations will be deployed in area of poor, or no, macrocell coverage. This is because an alternative option of the macrocell base station instructing femto wake-up is not available in that situation.

In preferred embodiments, the decision is made by the user terminal whether to request that a small cell base station transit to active mode. This means less signalling and computational resources are required from a network which would otherwise be involved in that decision.

The present invention also relates to a base station for wireless telecommunications configured to switch between a dormant mode and an active mode. The base station comprises a receiver configured to receive, whilst the base station is in the dormant mode, a request broadcast over air from a user terminal for the base station to switch to the active mode. The base station also comprises a processor configured to respond by switching the base station to active mode.

The present invention also relates to a user terminal for wireless telecommunications configured to broadcast over air in idle mode a request for a base station to switch from dormant mode to active mode. The user terminal is preferably also configured to connect in idle mode to the base station, upon receipt of pilot signal transmissions from the base station in active mode.

### Brief Description of the Drawings

Embodiments of the present invention will now be described by way of example and with reference to the drawings, in which:
Figure 1 is diagram illustrating an alternative femto wake up procedure (ALTERNATIVE PROPOSAL)
Figure 2 is a diagram illustrating a wireless communications network according to a first embodiment of the present invention;
Figure 3 is a diagram illustrating an example femtocell base station deployment within one macrocell shown in Figure 1;
Figure 3A is a diagram illustrating an example femtocell base station in more detail;
Figure 4 is a diagram illustrating a user terminal in idle mode, that sends periodic wake-up broadcasts, moving between femtocells;
Figure 5 is a diagram of how a user terminal in idle mode sends a wake-up broadcast upon entering a macrocell coverage hole;
Figure 6 is a diagram of how a user terminal in active mode sends a wake-up broadcast upon determining that the quality of service provided by the macrocell is inadequate; and
Figure 7 is a message sequence diagram illustrating a user terminal sending a wake-up broadcast upon determining that an active call is about to be set up.

### Detailed Description

The inventor considered that in a known approach, a cellular base station can determine whether to enter or exit a power-saving dormant mode in response to the location of a user terminal provided the user terminal that is in the coverage area of the base station is in active mode. This is because the cellular network, specifically the base station or the core network to which the base station is attached, can detect the user terminal when the user terminal is in a call session.

The inventors realised that conversely in the known approach when the user terminal is in idle mode, the user terminal does not send information back to the network about its location unless the user terminal moves from one paging area (called a Location Area in this Universal Mobile Telecommunications System, UMTS, example) to another. As a Location Area typically covers a large area and hence a large number of cells, the inventors realised that, in this known approach, a base station in power-saving mode will not know if the user terminal in idle mode entered its coverage area. In other words, in the known approach, activation of a base station to bring it out of power-saving mode can only be done when the user terminal is in active mode.

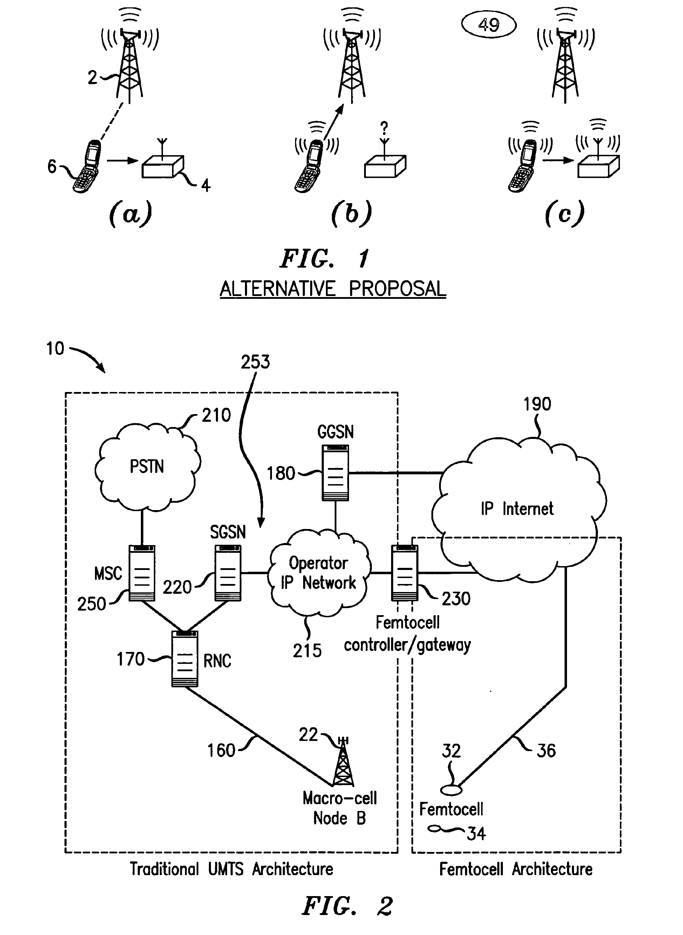

The inventors then considered an alternative proposal as shown in Figure 1. As shown in Figure 1, there is a macrocell base station 2 that is always switched-on, a femto 4 and a user terminal 6. As shown in the Figure, at a first point in time (a) the user terminal is in idle mode and camped on the macrocell (in other words idle-mode connected to the macrocell base station). The femto is then in dormant mode.

Subsequently, the user terminal goes into active mode and makes an active connection to the macrocell. This makes the user terminal detectable by the femto. For example at time (b) the user terminal is active and starts transmitting via a call connection with the macrocell. The user terminal is then detectable by the femto as the femto has a sniffer function, in other words a signal detector operating in the macrocell's frequency band.

The femto's detection of the user terminal triggers the femto to power on, in other words wake up from the power-saving sleep mode into awake mode. After this the call connection between the user terminal and macrocell base station is transferred to being between the user terminal and femto. Specifically, for example at time (c) as shown in Figure 1, the femto starts transmission of pilot signals that are detected by the user terminal. The call is then handed over from the macrocell base station to the femto.

We now turn to describing in detail an example embodiment of the invention, firstly describing a network including femtocell base stations then looking in detail at control of the femtos by user terminals transmitting wake-up broadcasts.

### Network

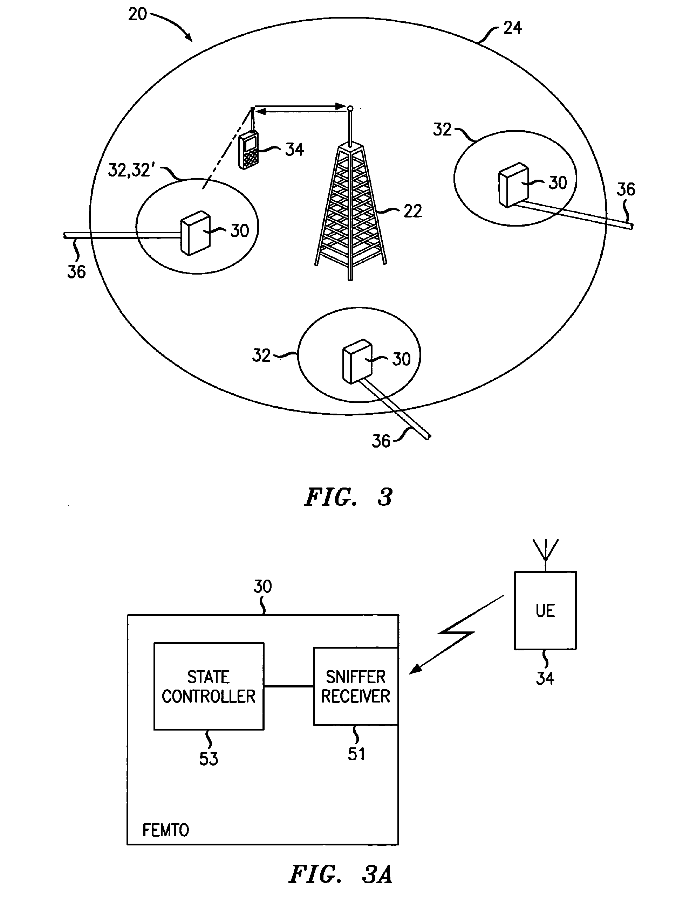

As shown in Figures 2 and 3, a network 10 for wireless communications, through which a user terminal 34 may roam, includes two types of base station, namely macrocell base stations and femtocell base stations (the latter being sometimes called "femtos"). One macrocell base station 22 is shown in Figures 2 and 3 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 2, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network, in particular a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core such as, for example, the Internet 190.

The MSC 250, SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 32. These connections to the femtocell controller/gateway 230 are broadband Internet Protocol connections ("backhaul") connections.

In Figure 3, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 3, the user of mobile terminal 34 is a preferred user of the nearest 32' of the femtocells 32.

As shown in Figure 3, the femtocell base stations 30 are connected via the broadband Internet Protocol connections ("backhaul") 36 to the core network (not shown in Figure 3) and hence the rest of the telecommunications "world" (not shown in Figure 3). The "backhaul" connections 36 allow communications between the femtocell base stations 30 through the core network (not shown). The macrocell base station is also connected to the core network (not shown in Figure 3).

### Wake-up broadcast by a user terminal

In the example, user terminal initiated wake-up of femtos is enabled. As will be described in more detail below, a user terminal in idle mode broadcasts a wake-up broadcast message, for example periodically. A user terminal is often denoted a UE (user equipment) and, accordingly, the wake-up broadcast may be denoted a UEW broadcast. Femtos in sleep mode are capable of receiving the UEW broadcast message. Upon reception of the UEW broadcast message, the femto in sleep mode wakes up, in other words transits to active mode. In transiting to active mode, the femto resumes transmitting pilot signals in its pilot channel so as to enable call connections with user terminals to be handed over to the femto.

As shown in Figure 3A, the femto 30 includes a sniffer receiver 51 which even in sleep mode is active to receive UEW broadcast(s). The sniffer receiver 51 is connected to a processor, namely a mode controller 53, which is operative to activate/deactivate certain other components (not specifically shown) of the femto depenent on whether asleep mode or active mode is selected.

As will be described in more detail below, properties of the UEW broadcasts, in particular transmit, frequency of transmission, and period between transmissions are tailored to user terminal requirements.

The UEW broadcasts can be made periodically according to fixed periods, or when particular circumstances arise. These are considered below.

### Periodic UEW broadcasts

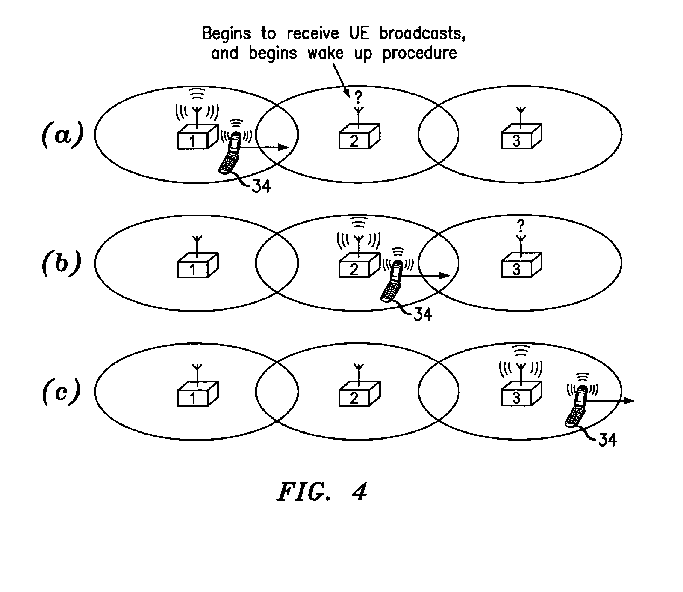

In this example, each user terminal in idle mode performs a UEW broadcast periodically, for example at regular intervals of once per minute. As shown in Figure 4 (a), at a first point in time, the user terminal 34 is in the coverage area of Femto1, which is in active mode, and is approaching Femto2 which is in sleep mode.

When in sleep mode, the femto has reduced functionality as its internal hardware components for radio transmission are powered down. In particular, in this mode the femto does not make pilot signal transmissions on its pilot channel. However in this mode the femto has a receiver, namely the sniffer receiver 51, that remains able to receive and decode UEW broadcasts. This function of the receiver, despite the femto being in sleep mode, is often known as "sniffing".

As the user terminal moves towards Femto2, Femto2 receives the UEW broadcast message and so exits sleep mode and enters active mode in which Femto2 transmits pilot signals.

As shown in Figure 4(b), the user terminal then enters the coverage area of Femto2 and performs an idle mode mobility procedure, for example a cell relocation procedure or paging area update, so as to become idle-mode connected ( also known as "camped") on Femto2. As the user terminal has exited the coverage area of Femto1, Femto1 ceases to receive the UEW broadcasts. Upon noting that UEW broadcasts have not been received for a set period of time, Femto 1 goes back into sleep mode.

As shown in Figure 4 (c), at a later time a similar procedure occurs but with the user terminal camping on Femto3, and Femto2 going into sleep mode after no longer receiving UEW broadcasts for a set period of time.

It will be appreciated that in this example a femto wakes up to provide coverage when a user terminal is near but goes to sleep when there are no user terminals nearby. User terminals are given coverage by femtos when possible. This has the effect that femto coverage "follows" user terminals as they move around an area. In this example, the femtos, Femto1, Femto2 and Femto3, are deployed to work together in an area such as for example, in a business, an office, a university campus, or a specified zone within a metropolitan region, so as to provide continuous coverage to user terminals moving within that area. This "following"is advantageous in reducing mobility related signalling between femtos and the macrocellular network, assuming that the femtos and macrocell base stations use different location areas/paging areas and so mobility related signalling is required.

In another otherwise similar embodiment, a user terminal also transmits fixed periodic UEW broadcasts when in active mode. Femtos can then detect the active mode user terminal either by detecting UEW broadcasts or by detecting the presence of the user terminal in another way, for example by detecting a rise in received signal level using a sniffer function which can be considered a signal detector operating in the macrocell's frequency band.

### UEW Broadcasts on demand

In some other embodiments, rather than sending UEW broadcasts simply strictly periodically, the UEW broadcasts are instead sent only in selected circumstances. Four examples are considered in turn below, namely when the user terminal is in a macrocell coverage hole, when a faster data rate is required, when triggered by the user terminal initiating setup of an active call, and when triggered by location information.

### Upon experiencing a macrocell coverage hole

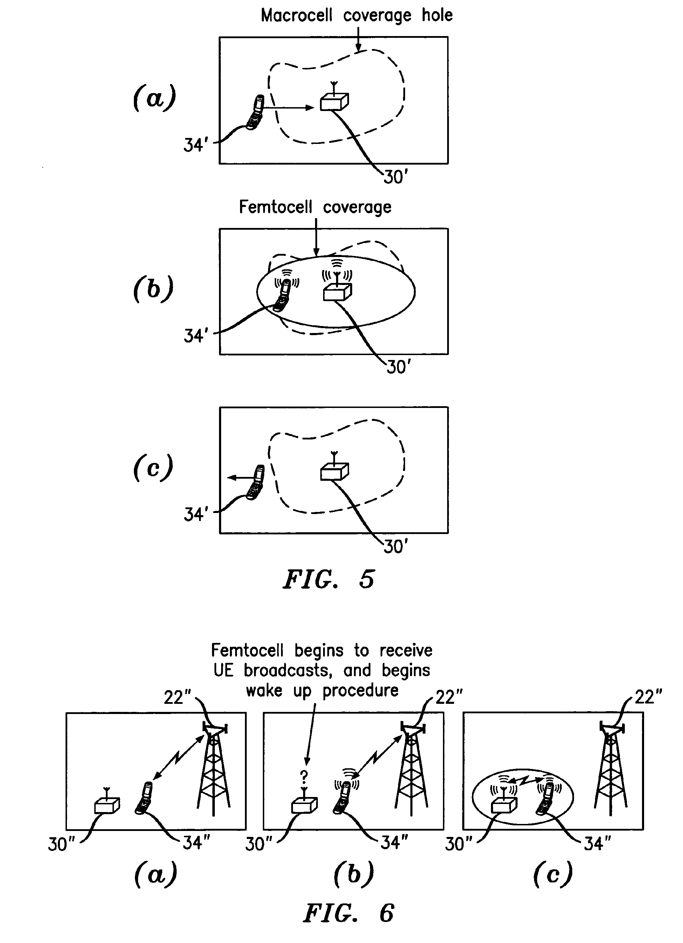

As shown in Figure 5, a user terminal in idle mode moves within the coverage provided by macrocell base stations. As shown in Figure 5, at a time denoted (a), the user terminal 34' enters an area where macrocell coverage is not available so the power of pilot signals received by the user terminal goes below a threshold triggering the user terminal to start broadcasting UEW broadcasts at regular intervals.

There is a femto 30' in the macrocell coverage hole. In response to receiving a UEW broadcast, as shown in Figure 5 at time (b), the femto transits from sleep mode to active mode. This is so as to provide coverage to the user terminal as the user terminal enters the the macrocell coverage hole. The user terminal continues its periodic UEW broadcasts whilst the user terminal is idle mode connected to the femto, in other words is camped on the femto.

At a later time (denoted (c) in Figure 5) the user terminal moves out of the femtocell so camps back on the macrocell (also known as relocating to the macrocell) and stops its UEW broadcasts. After a set period of time of not receiving a UEW broadcast the femto goes back into sleep mode.

It will be appreciated that this approach makes use of a femto deployed in a macrocellular coverage hole being able to enter sleep mode without requiring control by the macrocell network. This is useful particularly as femtos are often deliberately deployed to provide coverage in macrocellular coverage gaps.

### Upon a faster data rate being required

The user terminal is also configured to perform UEW broadcasts when the user terminal is experiencing unacceptable quality of service during an active mode connection, namely a voice or data call, and so requires additional resources.

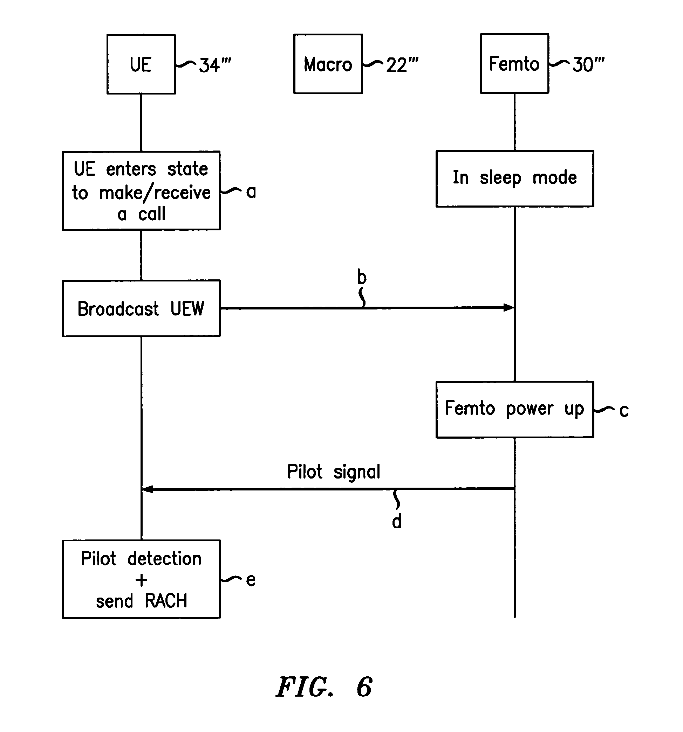

As shown in Figure 6, to begin with (a) the user terminal 34" is connected via the macrocell base station 22" in a data connection whereby the user is watching streaming video. The femto 30" is within range but is in sleep mode. When the user terminal detects that the data rate provided via the macrocell base station is not sufficient to provide satisfactory service to the user, the user terminal starts to broadcast the UEW message. The UEW message is repeatedly broadcast.

As shown in Figure 6, at time (b) the femto 30" receives one of the UEW messages and in response exits sleep mode. The connection with the user terminal is then handed over (at a time (c)) from the macrocell base station to the femto which provide a higher data rate to the user terminal and hence a better perceived quality of service to the user. Upon the call being terminated as the user no longer desires the video stream, the broadcast of the UEW messages is ceased and the femto reverts to sleep mode.

### UEW Broadcast during active call setup

In another basically similar embodiment, when a user terminal that is camped on a macrocell base station enters a state so as to make or receive a call, the user terminal sends a UEW broadcast in order to wake up any femtos that are in range. The user terminal enters this state, for example when the user presses a keypad or the user terminal receives a paging message from the macrocell base station.

If the user terminal detects a femto after broadcasting the UEW message, the user terminal initiates the active mode procedures of call setup via the femto (instead of via the macrocell base station).

In particular, as shown in Figure 7, upon entering (step a) the state to make or receive a call, the user terminal 34'" sends (step b) a UEW broadcast by the user terminal 34"' prior to establishing Radio Resource Control (RRC) connection using the Random Access Control Channel (RACH). The UEW broadcast is received by a femto in range which is in sleep mode, causing the femto to enter (step c) active mode in which the femto makes (step d) pilot transmissions. In response, the user terminal sends (step e) RRC signalling over the RACH channel to set up the call. In this way RRC procedures between the macrocell base station and the user terminal are avoided.

### Location-triggered UEW broadcasts

In some embodiments, a user terminal has location information available, and makes UEW broadcasts upon identifying the current location of the user terminal as being within a specified area.

For example a user terminal that is a registered user of several private access femtos stores the location of each of those femtos in its memory. Using location information, for example from Global Positioning System (GPS), the user terminal determines whether it is in the vicinity of any of the femtos that it is registered with. If yes, the user terminal makes UEW broadcasts until it ceases to be in the vicinity of any of those femtos.

### Form of UEW broadcast

In the particular examples described above, a UEW broadcast is simply a burst of energy in a specified frequency channel that does not contain extra information. The wake-up, in other words the transit to active mode, of the femto is triggered by detecting this increase in received energy in that channel. In this approach the femtos are not able to identify the user terminal from the UEW broadcast, so this is particularly suitable for public access femtos. In terms of energy consumption, battery power use by the user terminal is low, and femtos use, of course, less power in sleep mode than in active mode, as most components are switched off in sleep mode.

In some alternative examples, the UEW broadcast has a more complex form consisting of a data packet that contains extra information such as the identifier of the user terminal, and the user terminal's service requirements. Femtos that receive these broadcasts decode the packet and make a decision whether or not to transit to active mode dependent upon this extra information.

Specifically, a femto is able to obtain the information identifying the user terminal, which is particular useful when the femto is of private access type because then the femto only wakes up upon determining that the received UEW broadcast is from a registered user. Furthermore, the service requirement information allows the femto to make a more informed decision of whether to wake up or remain in sleep mode. For example, if the user terminal is not using a data intensive service, the femto may decide to remain in sleep mode so that the user terminal remains connected to the macrocell base station. This may be more energy efficient overall than waking up the femto in those circumstances.

In comparison to the simple energy burst type of UEW broadcast, battery power consumption by the user terminal may be higher for a UEW broadcast data packet as there is extra processing to produce the packet UEW broadcasts which have longer transmit times than simple bursts. Also, there is additional processing by the femtos which must keep more components active during sleep mode to decode the packet UEW broadcast. Accordingly, relatively higher power consumption might result.

### UEW Broadcast power level

The power level of UEW broadcasts is controlled by the user terminal. For example, during UEW broadcasts on demand (rather than continuously periodically), the first UEW broadcast has a low power. Then if the user terminal does not detect any pilot transmissions from a woken-up femto, the user terminal sends a further UEW broadcast at a higher power. This process continues, each time the power being increased in a gradual way until pilot transmissions are detected or a maximum transmit power level is reached. This gradual power increase ensures that in the situation where there are multiple femtos that would be within range to receive a UEW broadcast if made at maximum power, a lower power is sufficient, such that only the femto having the lowest propagation path loss is woken up. Also there is reduced battery power consumption in user terminals as high or maximum power is rarely used.

The present invention may be embodied in other specific forms without departing from its essential characteristics. For example, user terminal initiated wake-up can be used in respect of macrocell base stations, Wireless Local Area Network (WLAN) access points, Bluetooth devices, DECT base stations, relays and so on. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of switching a base station (30) for wireless telecommunications between a dormant mode and an active mode, the method comprising:
a user terminal (34) in idle mode broadcasting over air a request for the base station to switch to active mode;
the base station receiving (51,53) the request and responding by switching from dormant mode to active mode;
**characterised in that**
the user terminal (34) is a registered user terminal of several private access small cell base stations and comprises a memory in which the locations of those base stations are stored;
upon identifying the location of the user terminal using Global Positioning System, GPS, the user terminal determines whether the user terminal is in the vicinity of any of those base stations and, if so, repeatedly broadcasting over air the request with increasing power until one of the small cell base stations is detected by the user terminal as making pilot signal transmissions, or until the user terminal ceases to be in the vicinity of any of those base stations.

2. A method according to claim 1, in which in the dormant mode the base station does not make pilot signal transmissions, and in the active mode the base station does make pilot signal transmissions.

3. A method according to claim 1 or claim 2, in which the base station is a small cell base station.

4. A method according to any preceding claim, in which the request is a power pulse in a given frequency band and all small cell base stations receiving the pulse switch to active mode.

5. A method according to any of claims 1 to 4, in which the request includes a user terminal identifier and only a small cell base station with which the user terminal is registered may switch to active mode in response.

6. A method according to any preceding claim, in which the user terminal also broadcasts (Fig 6:b) the request during an active call connection, upon experiencing unacceptable quality of service.

7. A method according to any preceding claim, in which the user terminal broadcasts the request repeatedly and periodically whilst in idle mode.

8. A user terminal for wireless telecommunications configured to broadcast over air in idle mode a request for a base station (30) to switch from dormant mode to active mode;
**characterised in that**
the user terminal (34) is a registered user terminal of several private access small cell base stations and comprises a memory in which the locations of those base stations are stored;
the user terminal being configured:
to identify the location of the user terminal using Global Positioning System, GPS,
to determine whether the user terminal is in the vicinity of any of those base stations and, if so, to repeatedly broadcast over air the request with increasing power until one of the small cell base stations is detected by the user terminal as making pilot signal transmissions, or until the user terminal ceases to be in the vicinity of any of those base stations.

## Patentansprüche

1. Verfahren zum Umschalten einer Basisstation (39) für die drahtlose Telekommunikation zwischen einem Ruhemodus und einem aktiven Modus, wobei das Verfahren umfasst:
Broadcasten, durch ein Benutzerendgerät (34) im Ruhemodus, einer Aufforderung für das Umschalten der Basisstation in den aktiven Modus über die Luftschnittstelle;
Empfangen, an der Basisstation (51, 53), der Aufforderung, und Reagieren durch Umschalten vom Ruhemodus in den aktiven Modus;
**dadurch gekennzeichnet, dass**
das Benutzerendgerät (34) ein bei mehreren kleinzelligen Privatzugriffs-Basisstationen angemeldetes Benutzerendgerät ist und einen Speicher umfasst, in welchem die Standorte dieser Basisstationen gespeichert sind;
das Benutzerendgerät nach Identifizieren des Aufenthaltsortes des Benutzerendgeräts unter Verwendung des Globalen Positionsbestimmungssystems, GPS, ermittelt, ob sich das Benutzerendgerät in der Nähe einer beliebigen dieser Basisstationen befindet, und, wenn dies der Fall ist, die Aufforderung bei zunehmender Leistung so lange wiederholt über die Luftschnittstelle broadcastet, bis eine der kleinzelligen Basisstationen von dem Benutzerendgerät als Pilotsignal übertragende Basisstation erkannt wird, oder bis sich das Benutzerendgerät nicht länger in der Nähe einer beliebigen dieser Basisstationen befindet.

2. Verfahren nach Anspruch 1, wobei die Basisstation im Ruhemodus keine Pilotsignalübertragungen durchführt, und wobei die Basisstation im aktiven Modus Pilotsignalübertragungen durchführt.

3. Verfahren nach Anspruch 1 oder 2, wobei die Basisstation eine kleinzellige Basisstation ist.

4. Verfahren nach einem beliebigen der vorstehenden Ansprüche, wobei die Aufforderung ein Leistungspuls in einem gegebenen Frequenzband ist, und wobei alle kleinzelligen Basisstationen, die den Puls empfangen, in den aktiven Modus umschalten.

5. Verfahren nach einem beliebigen der Ansprüche 1 bis 4, wobei die Aufforderung eine Benutzerendgerätkennung enthält und nur eine kleinzellige Basisstation, bei der das Benutzerendgerät angemeldet ist, in Reaktion darauf in den aktiven Modus schalten kann.

6. Verfahren nach einem beliebigen der vorstehenden Ansprüche, wobei das Benutzerendgerät die Aufforderung ebenfalls während einer aktiven Rufverbindung broadcastet (Fig. 6:b), wenn eine nicht akzeptable Dienstgüte festgestellt wird.

7. Verfahren nach einem beliebigen der vorstehenden Ansprüche, wobei das Benutzerendgerät die Aufforderung wiederholt und periodisch broadcastet, während es sich im Ruhemodus befindet.

8. Benutzerendgerät für die drahtlose Telekommunikation, konfiguriert für das Broadcasten, im Ruhemodus, einer Aufforderung zum Umschalten einer Basisstation (30) vom Ruhemodus in den aktiven Modus über eine Luftschnittstelle;
**dadurch gekennzeichnet, dass**
das Benutzerendgerät (34) ein bei mehreren kleinzelligen Privatzugriffs-Basisstationen angemeldetes Benutzerendgerät ist und einen Speicher umfasst, in welchem die Standorte dieser Basisstationen gespeichert sind;
das Benutzerendgerät für Folgendes konfiguriert ist:
Identifizieren des Aufenthaltsortes des Benutzerendgeräts unter Verwendung des Globalen Positionsbestimmungssystems, GPS,
Ermitteln, ob sich das Benutzerendgerät in der Nähe einer beliebigen dieser Basisstationen befindet, und, wenn dies der Fall ist, wiederholtes Broadcasten der Aufforderung bei zunehmender Leistung über die Luftschnittstelle, bis eine der kleinzelligen Basisstationen von dem Benutzerendgerät als Pilotsignal übertragende Basisstation erkannt wird, oder bis sich das Benutzerendgerät nicht länger in der Nähe einer beliebigen dieser Basisstationen befindet.

## Revendications

1. Procédé de commutation d'une station de base (30) pour des télécommunications sans fil entre un mode dormant et un mode actif, le procédé comprenant les étapes suivantes :
un terminal utilisateur (34) en mode de veille diffuse par voie hertzienne une demande pour que la station de base passe en mode actif ;
la station de base reçoit (51, 53) la demande et répond en passant du mode dormant au mode actif ;
**caractérisé en ce que**
le terminal utilisateur (34) est un terminal utilisateur enregistré de plusieurs stations de base de petites cellules d'accès privé et comprend une mémoire dans laquelle les emplacements de ces stations de base sont stockés ;
lors de l'identification de l'emplacement du terminal utilisateur au moyen du système de positionnement global, GPS, le terminal utilisateur détermine si le terminal utilisateur est à proximité de l'une quelconque de ces stations de base et, si tel est le cas, diffuse à répétition par voie hertzienne la demande avec une puissance croissante jusqu'à ce que le terminal utilisateur détecte qu'une des stations de base de petites cellules effectue des transmissions de signaux pilotes, ou jusqu'à ce que le terminal utilisateur cesse d'être à proximité de l'une quelconque de ces stations de base.

2. Procédé selon la revendication 1, dans lequel en mode dormant, la station de base n'effectue pas de transmissions de signaux pilotes et en mode actif la station de base effectue des transmissions de signaux pilotes.

3. Procédé selon la revendication 1 ou la revendication 2, dans lequel la station de base est une station de base de petites cellules.

4. Procédé selon l'une quelconque des revendications précédentes, dans lequel la demande est une impulsion de puissance dans une bande de fréquences donnée et toutes les stations de base de petites cellules recevant l'impulsion passent en mode actif.

5. Procédé selon l'une quelconque des revendications 1 à 4, dans lequel la demande comprend un identifiant de terminal utilisateur et seule une station de base de petites cellules avec laquelle le terminal utilisateur est enregistré peut passer en mode actif en réponse.

6. Procédé selon l'une quelconque des revendications précédentes, dans lequel le terminal utilisateur diffuse aussi (Figure 6:b) la demande durant une connexion d'appel active, lorsqu'une qualité de service inacceptable est découverte.

7. Procédé selon l'une quelconque des revendications précédentes, dans lequel le terminal utilisateur diffuse la demande de manières répétée et périodique en mode de veille.

8. Terminal utilisateur pour des télécommunications sans fil configurées pour diffuser par voie hertzienne en mode de veille une demande pour qu'une station de base (30) passe du mode dormant au mode actif ;
**caractérisé en ce que**
le terminal utilisateur (34) est un terminal utilisateur enregistré de plusieurs stations de base de petites cellules d'accès privé et comprend une mémoire dans laquelle les emplacements de ces stations de base sont stockés ;
le terminal utilisateur étant configuré :
pour identifier l'emplacement du terminal utilisateur au moyen du système de positionnement global, GPS,
pour déterminer si le terminal utilisateur est à proximité de l'une quelconque de ces stations de base et, si tel est le cas, pour diffuser de manière répétée par voie hertzienne la demande avec une puissance croissante jusqu'à ce que le terminal utilisateur détecte qu'une des stations de base de petites cellules effectue des transmissions de signaux pilotes, ou jusqu'à ce que le terminal utilisateur cesse d'être à proximité de l'une quelconque de ces stations de base.
